# EUROPEAN PATENT APPLICATION

(11) **EP 4 848 148 A1**
(43) Date of publication of application: **02.12.2026**
(21) Application number: 25178874.1
(22) Date of filing: 26.05.2025
(51) Int. Cl.: G06N 3/084, G06N 3/096, G06N 5/022, G06N 7/01, G05B 13/02

(54) **METHOD FOR DETERMINING INVARIANT AND DOMAIN-SPECIFIC CAUSAL RELATIONSHIPS AMONG A FIXED SET OF VARIABLES**

(71) Applicant: Robert Bosch GmbH, 70442 Stuttgart (DE)
(72) Inventor: Yu, Jingyi, 70439 Stuttgart (DE); Muellerschoen, Moritz, 70839 Gerlingen (DE)

(57) **Abstract**

A computer method determines causal relationships among variables across multiple domains. First, it trains a causal discovery model on pooled data from all domains. Second, it identifies "stable" variables whose causal mechanisms are consistent across domains. Third, for each domain, it trains a second model, constraining or penalizing changes to stable variables' parameters while allowing parameters for "unstable" variables to adapt to the specific domain. This yields domain-specific causal models that may be used for improved process control in manufacturing.

## Description

### Technical field

The invention relates to a computer implemented method for determining invariant and domain-specific causal relationships among a fixed set of variables, a corresponding system, a computer program, and a machine-readable storage medium.

### Prior art

In manufacturing systems, sensors are widely deployed to monitor machines, components, and environmental conditions. Collection and fusion/combination of data from such sensors is crucial for monitoring and controlling complex processes. Machine learning-based methods have been applied in this context, offering predictive capabilities by recognizing patterns in i.i.d. (independent and identically distributed) data. However, such methods exhibit limitations with out-of-distribution (OOD) generalization, hindering their effectiveness in dynamic manufacturing environments where operating conditions and data distributions can vary significantly.

Existing causal discovery techniques aim to infer causal relationships between variables, often represented as Directed Acyclic Graphs (DAGs). Zheng et al., in "Learning Sparse Nonparametric DAGs", Proceedings of the Twenty Third International Conference on Artificial Intelligence and Statistics, ser. Proceedings of Machine Learning Research, S. Chiappa and R. Calandra, Eds., vol. 108. PMLR, Aug. 2020, pp. 3414-3425, proposed a method for learning sparse nonparametric DAGs via continuous optimization, extending to nonlinear structural equation models. However, this method also assumes i.i.d. data, limiting its applicability in real-world manufacturing systems with inherent data heterogeneity across factors like, e.g., time, machine ID, part type, etc..

### Disclosure of the invention

According to a first aspect, the invention relates to a computer-implemented method for determining causal mechanisms among measured variables across multiple domains. Optionally, in addition, the computer-implemented method may be configured for controlling a manufacturing system based on the determined causal mechanisms. A measured variable, in this context, may be a quantity whose value is determined by a measuring process, using one or more sensors. This may include values derived from calculations or combinations of multiple sensor measurements. The method comprises the following steps. In a first step, data samples are received. Each data sample may contain values of a common set of observed variables and a domain identifier. Accordingly, across the multiple domains, there shall exist a common, i.e., shared set of observed variables. However, the values of these observed variables may differ across the domains. In a sub-step of the first step, the samples from all domains are combined into a pooled data set. Subsequently, a first differentiable neural-network-based causal discovery model is trained on the pooled data set. Training may be performed by gradient descent. After this training, the causal-discovery model determines parametrized functional mechanisms relating the observed variables to each other and thereby determines a first set of mechanism parameters - i.e. weights of the neural network, on which the causal discovery model is based - and a first adjacency matrix corresponding to the first causal discovery model. Generally, in this context, a parameterized functional mechanism may be a mathematical function - e.g. a neural network -, with adjustable parameters, that describes how one or more observed (cause) variables influence another observed (effect) variable; mechanism parameters may be understood as the adjustable values within the parameterized functional mechanism that may define the nature and the strength of a causal relationship between observed variables (i.e., e.g. the cause(s) and its/their effect).

In a second method step, the following sub-steps may be performed, separately for each observed variable. In a sub-step, residuals are computed, which may be given by per-sample differences between a respective observed value and the respective model prediction for each variable on the pooled data set. Subsequently, it is determined whether the residuals are independent of the domain identifiers. This may, for example, be based on a statistical independence test. The variable is then labelled as stable when the corresponding residuals are independent, e.g. within predefined thresholds, of the domain identifiers and may be labelled as unstable otherwise.

In a third step, for each domain separately, the following sub-steps are performed. A second causal discovery model is initialized and parameters of this model are determined by training the second causal discovery model on samples from the respective domain while:
(i) performing either freezing parameters associated with variables labelled stable in the second step, - i.e. keeping these parameters at their corresponding values determined in the first step by the first causal discovery model -, or
   penalizing deviations of parameters associated with variables labelled stable from their values in the first step, and
(ii) at least updating the parameters associated with variables labelled unstable. In case of the penalizing option, all parameters will be updated, accordingly.

In this way, a respective second set of mechanism parameters - weights of the respective trained neural network associated with the causal discovery model - and a second adjacency matrix specific to the domain are determined.

A domain, according to the present invention, may be understood as a specific application area characterized by a defined set of measurable variables. For instance, the method may be applied to a manufacturing process. In this case, different domains, i.e. specific application areas, could be, for instance, different production lines within the same factory producing the same product. The different production lines may likely have the same set of measurable variables (temperature, pressure, etc.), but the specific values and distributions of those variables likely differ due to variations in equipment, operating conditions, raw materials, and/or other factors.

Advantageously, the method allows to capture domain-specific nuances by adapting the base model based on the identification of "unstable" variables. Further, identifying "stable" causal mechanisms across domains may enhance the robustness and generalizability of the learned relationships, enabling more reliable predictions and insights in, e.g., new, unseen domains. The combined approach of pooling and training first model and a subsequent domain-specific refinement may therefore offer a balanced solution for efficient and accurate causal discovery in complex, multi-domain settings.

Preferably, in the third step, freezing parameters associated with stable variables comprises restoring the respective parameter values according to the first set of mechanism parameters (i.e. restoring the neural networks weights learned on the pooled data in the first step) and setting gradients associated with the stable variables to zero such that their mechanism parameters remain fixed while the unstable variables are updated/adjusted in the training of the respective second causal discovery model.

Advantageously, freezing the parameters associated with stable variables, preferably by setting their corresponding gradients to zero, computational efficiency may be enhanced by reducing the number of parameters actively updated during the training of the domain-specific causal discovery models.

Preferably, in the third step, if deviations (from their values in the first step) of the parameters associated with variables labelled stable are penalized, this comprises: adding a penalty term proportional to the average squared distance between the first and second adjacency matrices on edges incident to the stable variables to a loss function. The latter loss function shall then be optimised during training of the respective second causal-discovery model.

Advantageously, the aforementioned approach comprising adding a penalty term allows - opposed to the freezing option - for adjustments to the stable causal relationships while still discouraging large deviations from the pooled model. Thereby, a balance between capturing domain-specific nuances and preserving the stability of globally learned mechanisms is possible. As the penalty may focus specifically on edges involving stable variables, this approach allows for greater flexibility for edges connected to unstable variables. Accordingly, choosing this 'penalty option', an adaption of the respective second causal discovery models to domain-specific variations is possible where they are most likely to occur, while the core structure learned from the pooled data may be preserved.

Preferably, in the third step, in each domain, parameters of the respective second causal discovery model associated with stable variables are initialized with the first mechanism parameters, and parameters of the second causal discovery model associated with unstable variables are initialized randomly, if in the subsequent training of the second causal discovery model parameters associated with variables labelled stable in the second step are frozen. Alternatively, if in the subsequent training of the second causal discovery model, deviations of parameters associated with variables labelled stable are penalized, parameters of the respective second causal discovery model are initialized randomly.

Advantageously, in case of freezing parameters of the second causal discovery models that are associated with stable variables, randomly initializing parameters associated with unstable variables may encourage an exploration of the domain-specific data to find optimal parameters related to the unstable variables, which are expected to show greater variation across domains. On the other hand, in case of the 'penalty option', a random initialization of all parameters of the second causal discovery models may avoid biasing the domain-specific models too strongly towards the first causal discovery model. While the penalty term may encourage similarity to the first causal discovery model, random initialization allows the optimization process to explore a wider range of parameter space, potentially finding better solutions within each domain while still adhering to the constraints imposed by the penalty term. This may prevent the optimization from getting stuck in a local minimum prematurely influenced by the first causal discovery model's initialization.

Preferably, the differentiable causal-discovery model is a feed-forward multilayer perceptron whose first-layer column L2-norms constitute a weighted adjacency matrix W, and wherein the neural-network parameters are determined by gradient-based optimisation while enforcing sparsity and enforcing acyclicity with the smooth constraint $h \left(W\right) = tr \left({e}^{W ∘ W}\right) - d = 0 ,$ with d being the number of measured/observed variables. Here, ∘ denotes the Hadamard product, and *e^{A}* denotes the matrix exponential of matrix A. Sparsity may, e.g., be enforced by a ℓ₁ regularization term in the loss-function in gradient-based optimization.

It is worth to note that this may apply to the first causal discovery model and this may apply to the second causal discovery models per domain.

It shall be noted that such approach for determining the causal mechanisms is described in Zheng et al., cited above. In order to make the notation exemplarily more explicit here, a set of observed variables *X*₁, ... , *X_{d}* may be considered, associated with vertices of a DAG (directed acyclic graph). Each observed variable may be determined by an assignment ${X}_{j} = {f}_{j} \left({PA}_{j}, {N}_{j}\right) , j = 1 , … , d ,$ where ***PAⱼ*** shall stand for *Xⱼ*'s parents in the graph and *Nⱼ* shall denote an unobserved error due to omitted factors. Parents may be connected to *Xⱼ* by directed edges in the graph, representing direct causal relationships, as parents directly affect the assignment of *Xⱼ* through the above relation, *Xⱼ = fⱼ*(***PAⱼ**, Nⱼ*),*j* = 1, ... , *d*. Typically, the set of noises *N*₁, ... , *N_{d}* may be assumed to be jointly independent to ensure that the joint distribution entailed by *Xⱼ = fⱼ*(***PAⱼ**, Nⱼ*), *j* = 1, ..., d can be factorized into causal conditionals $P \left({X}_{1},…,{X}_{d}\right) = {\sum }_{j = 1}^{d} P \left(\left.{X}_{j}\right|{PA}_{j}\right) .$

Zheng et al., "Dags with no tears: Continuous optimization for structure learning." Advances in neural information processing systems 31 (2018), leveraged an algebraic characterization of the DAG, recasting the score-based combinatorial optimization problem as a continuous optimization problem ${min}_{W ∈ {R}^{d \times d}} F \left(W\right) subject to h \left(W\right) = 0 ,$
where, in this case here, the graph is defined by the weighted adjacency matrix *W* ∈ *R*^{*d*×*d*}, and *h: R*^{*d*×*d*} → *R* (*R* denoting the real numbers) is a differentiable function that measures the acyclicity of the graph such that *h*(*W*) *=* 0 if and only if *W* leads to a DAG. Considering a differentiable scoring function *F*(*W*), the optimization problem may be solved using gradient descent methods. For instance, among other options, the functional relationships among the variables may be approximated with feed-forward multi-layer perceptrons (MLPs). In this context, given a data matrix *X =* [x_{1₁}, ... , x*_{d}*] ∈ *R*^{*n*×*d*} consisting of *n* i.i.d. samples from the joint distribution *P*(*X*)*,* an MLP with *h* hidden layers and a single activation function *σ*: *R* → *R* may be considered to approximate *fⱼ* such that $MLP \left(X; {θ}_{j}\right) = σ \left({A}_{j}^{\left(h\right)}σ\left(⋯σ \left({A}_{j}^{\left(1\right)}{X}^{T}\right)\right)\right) ,$
where ${θ}_{j} = \left({A}_{j}^{\left(1\right)},…{A}_{j}^{\left(h\right)}\right)$ denotes the parameters of the MLP and ${A}_{j}^{\left(l\right)} ∈ {R}^{{m}_{l} \times {m}_{l - 1}}$ corresponds to the weights of the lth layer. It can be observed that MLP(X; θ*ⱼ*) is independent of *Xₖ* if the kth-column of ${A}_{j}^{\left(1\right)}$ only consists of zeros. This results in [*W*(*f*)]*ₖⱼ* = 0 if ∥*k*th's column ${\left.\left({A}_{j}^{\left(1\right)}\right)\right‖}_{2} = 0$. Letting θ = (θ₁, ... , θ*_{d}*) denote the parameters for the set of MLP. The weighted adjacency matrix W may then be extracted from θ according to ${\left[W\left(θ\right)\right]}_{kj} = {\left‖kth-column\left({A}_{j}^{\left(1\right)}\right)\right‖}_{2}$.

The optimization problem may thus be defined as ${min}_{θ} \frac{1}{n} {\sum }_{j = 1}^{d} l \left({x}_{j},MLP\left(X; {θ}_{j}\right)\right) + λ {\left‖{A}_{j}^{\left(1\right)}\right‖}_{1 , 1}$ $subject to h \left(W\left(θ\right)\right) : = tr \left({e}^{W \left(θ\right) ∘ W \left(θ\right)}\right) - d = 0 ,$ where ℓ may denote a loss function such as the least squares or the negative log-likelihood, ℓ₁ regularization ${\left‖{A}_{j}^{\left(1\right)}\right‖}_{1 , 1}$ may be used to enforce sparsity in the learned DAG, and the acyclicity constraint is enforced by *h*(*W*(*θ*)) where o denotes the Hadamard product and *e^{A}* denotes the matrix exponential of *A.* It may be noted that such continuous optimization problem may be solved using the augmented Lagrangian method with the L-BFGS-B algorithm.

Preferably, determining whether the residuals are independent of the domain identifiers - in the second step - comprises applying a Hilbert-Schmidt Independence Criterion test to the residuals and domain identifiers at a predefined significance level.

For instance, the Hilbert-Schmidt Independence Criterion (HSIC) is described in A. Gretton et al., "A kernel statistical test of independence", Advances in neural information processing systems, vol. 20, 2007. It may be noted that the Hilbert-Schmidt Independence Criterion (HSIC) is a statistical test for independence between two random variables. It uses kernel embeddings to quantify dependence, providing a non-parametric measure applicable also in cases where data distributions are not identically and independently distributed. A high HSIC value suggests dependence, while a low value suggests independence.

Preferably, the observed variables comprise at least one of temperature, material type, pressing force, displacement, and wherein the multiple domains comprise different material types of one or several workpieces. For instance, the material type may affect the stiffness of the one or the several workpiece(s).

It may be noted that the method described herein is capable of handling heterogeneous domains (i.e. non-i.i.d distributions across domains) where underlying causal mechanisms may vary due to factors like, e.g., material stiffness.

Preferably, obtaining samples comprises obtaining measurements of the aforementioned variables during press-fitting manufacturing. The determined causal relationships may then, subsequently, be used for improved process control, predictive modeling of shrinkage rate, and/or fault detection in press-fitting manufacturing processes. The method may, in this case, further comprise, upon detection of a fault condition in the invariant causal relationships exceeding a predetermined threshold, the step of automatically controlling or stopping the press-fitting process to mitigate the fault condition.

Preferably, the fault condition may be mitigated by automatically reducing the press-fitting force to a safe preset value and commanding an operator-alert via a human-machine-interface.

According to a further aspect, the invention relates to a data processing system comprising a processor configured to perform a method as described herein. According to a further aspect, the invention relates to a computer program comprising machine-readable instructions, which, when the program is executed by a computer, cause the computer to carry out one of the computer-implemented methods described above and below. Furthermore, according to another aspect, the invention relates to a machine-readable storage medium, on which the above computer program is stored.

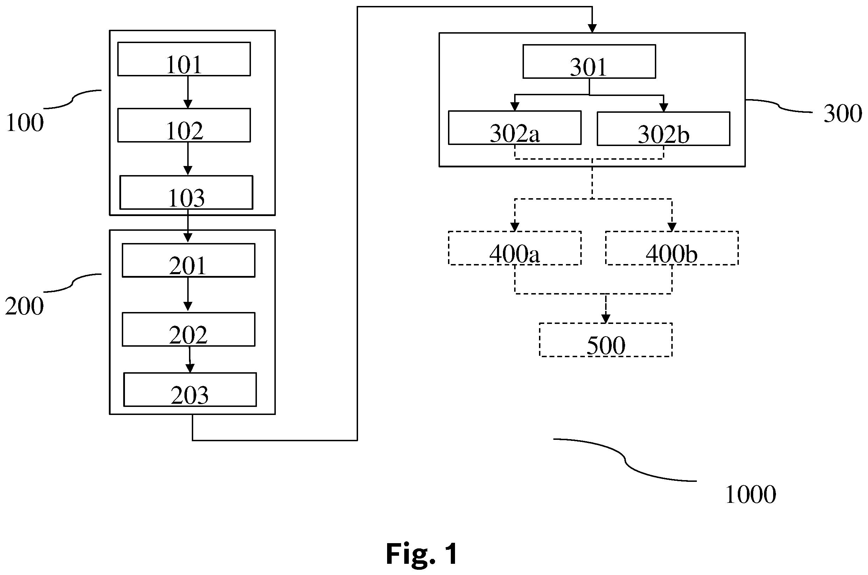

Embodiments of the invention will be discussed with reference to the following figure 1 in more detail. The figure shows:
- Figure 1: a flow chart of an exemplary embodiment.

### Description of the embodiments

Exemplarily, before discussing figure 1 below, an embodiment with corresponding formulas may be described hereinafter first.

According to this exemplary embodiment, in its first step, causal discovery is performed on a pooled dataset. To this end, given datasets ${D}_{k} = {\left\{{s}_{i}^{\left(k\right)}\right\}}_{i = 1}^{{n}_{k}}$ from multiple domains *k* ∈ {1, *..., K*}*,* the pooled data set $\left(X, D\right) = {∪}_{k = 1}^{K} \left\{\left.\left({s}_{i}^{\left(k\right)}, k\right)\right|i=\right.$ 1,2, ... , *nₖ*} may be created by pooling the samples from all datasets and including a discrete variable k, which shall indicate the domain index. Then, exemplarily, the algorithm NOTEARS-MLP described in Zheng et al., "Learning Sparse Nonparametric DAGs" may be applied on the pooled samples X, i.e. parameters of a corresponding MLP may be updated/adjusted until the corresponding loss term *L*_{NOTEARS-MLP}(θ| X) is minimized to identify causal structures in the pooled data.

In the second step of the exemplary embodiment, stable variables shall be determined, whose local causal mechanism *fⱼ* remain invariant across all domains. To this end, a set of predictors shall be identified leading to invariant conditionals by checking whether the residuals of prediction models are independent of the domain indices using the nonparametric HSIC test. In particular, a test sample $Z = {\left({R}_{j , i}, {D}_{i}\right)}_{i = 1}^{n}$ may be drawn from a joint distribution over residuals of MLP(X; θ*ⱼ*) and domain indices, where $n = {\sum }_{k = 1}^{K} {n}_{k}$ corresponds to the total number of samples from all domains. For HSIC_{b}(Z) the test statistic, its value under the null hypothesis may be approached by a Gamma distribution, the associated p-value p* may be approximated as ${p}^{∗} \approx 1 - {F}_{Ga} \left({HSIC}_{b}\left(Z\right)\right) ,$ **where** *F*_{Ga} shall define the cumulative distribution function of the gamma distribution. The null hypothesis *H*₀ of the independence between residuals and domain indices shall be rejected if p* is below the pre-definable significance level α. Otherwise, the estimated causal mechanism *fⱼ* is considered to be domain-invariant. As a result, stable variables with invariant causal mechanisms may be determined by collecting all *MLPs* whose residuals are independent of domain indices.

In the third step of the exemplary embodiment, causal discovery on individual datasets shall be performed. To this end, after detection of stable variables with invariant causal mechanisms in the second step, remaining domain-specific causal mechanisms shall be recovered by applying the NOTEARS-MLP algorithm with a random initialization in each individual domain. To consistently recover the causal structure of the stable variables in each domain, two alternative approaches/variants may be applied, respectively, to limit the degrees of freedom in updating the weights of stable MLPs in the third step:
- in a first variant, weights of stable MLPs may be frozen, by restoring their values from the first set of mechanism parameters (i.e. weights learned on the pooled data in the first step)before training (i.e. training in the third step) and by setting their gradients to zero during training;
- in a second variant original loss function is adjusted by adding an additional penalization term to the loss function that promotes consistent recovery of the common causal structure obtained in the second step.

The additional penalization term added to the loss function may essentially be given by the mean squared error between the predicted edge weights of stable variables using the pooled samples and samples from individual domains ${L}_{com}^{\left(k\right)} = \frac{1}{{\sum }_{i , j} {M}_{ij}} {\sum }_{i , j} {M}_{ij} {\left({W}_{pool , ij}-{W}_{ind , ij}^{\left(k\right)}\right)}^{2} ,$ where *M* denotes a mask matrix such that *M*_{:*j*} = 1 if *Xⱼ* is a stable variable.

Further, *W*ₚₒₒₗ and ${W}_{ind}^{\left(k\right)}$ denote the adjacency matrices estimated from the pooled data and estimated from the data from the *k^{th}* domain, respectively. Accordingly, the overall loss function that may then be employed within the NOTEARS-MLP algorithm to adjust the MLP parameters in the *k^{th}* domain may thus be written as $L = {L}_{NOTEARS} \left(\left.{θ}^{\left(k\right)}\right|{s}^{\left(k\right)}∼{D}_{k}\right) + γ {L}_{com}^{\left(k\right)} ,$ where *γ* shall be a non-negative weighting factor that shall control how strongly the model aligns with the common causal structure.

Figure 1 shows a further exemplary embodiment of a method 1000 for determining causal mechanisms among measured/observed variables across multiple domains. First step 100 comprises several sub-steps. In sub-step 101, data samples from multiple domains are received, each data sample containing values of a common set of observed variables and a domain identifier. The samples are combined into a pooled data set in sub-step 102. Sub-step 103 comprises the training, on the pooled data set, of a first differentiable neural-network-based causal discovery model. The model may be trained by gradient descent. The causal-discovery model determines parametrized functional mechanisms relating the observed variables to each other, and thereby determines a first set of mechanism parameters and a first adjacency matrix corresponding to the first causal discovery model.

Subsequent second step 200, likewise, comprises several sub-steps. In subsequent second step 200, the following sub-steps are performed, for each observed variable separately/individually. In sub-step 201, residuals given by per-sample differences between a respective observed value and the respective model prediction for each variable on the pooled data set are determined. Subsequently, in step 202 it is determined, whether the residuals are independent of the domain identifiers based on a statistical independence test. Such test may, for instance be, the HSIC test. In step 203, variables are labelled stable when the corresponding residuals are independent of the domain identifiers and unstable, otherwise.

Third method step 300 comprises, again for each domain, at least sub-steps 301 and 302. In step 301, a second causal discovery model for each domain is initialized. Step 302 comprises training the second causal discovery model on samples from that domain while either performing
- freezing parameters associated with variables labelled stable in the second step (variant 302a), or
- penalizing deviations of parameters associated with variables labelled stable from their values in the first step (302b).

At least the parameters associated with variables labelled unstable are then updated during training of the respective model. Specifically, in variant 302a only the parameters associated with variables labelled unstable are updated, whereas in variant 302b all parameters/network weights - associated with stable and unstable variables - are adjusted/optimized during training of the second causal discovery models. In both cases, a second set of mechanism parameters is determined per domain, and a second adjacency matrix specific to the respective domain.

In optional method step 400, the determined causal relationships may be used for improved process control, predictive modeling of shrinkage rate, and/or fault detection in press-fitting manufacturing processes. To this end, step 400 comprises, upon detection of a fault condition in the invariant causal relationships exceeding a predetermined threshold, an automatic controlling (step 400a) or stopping (step 400b) of the press-fitting process to mitigate the fault condition.

In further optional method step 500, a previously detected fault condition may be mitigated by automatically reducing the press-fitting force to a safe preset value and/or commanding an operator-alert via a human-machine-interface.

## Claims

1. A computer-implemented method (1000) for determining causal mechanisms among measured variables across multiple domains, the method comprising in a first step (100):
- Receiving (101) data samples from multiple domains, each data sample containing values of a common set of observed variables and a domain identifier;
- Combining (102) the samples into a pooled data set;
- Training (103), on the pooled data set, a first differentiable neural-network-based causal discovery model by gradient descent, wherein the causal-discovery model determines parametrized functional mechanisms for the observed variables and thereby determines a first set of mechanism parameters and a first adjacency matrix corresponding to the first causal discovery model;
In a second step (200), for each observed variable:
- Computing (201) residuals given by per-sample differences between a respective observed value and the respective model prediction for each variable on the pooled data set;
- Determining (202) whether the residuals are independent of the domain identifiers based on a statistical independence test;
- Labelling (203) the variable stable when the corresponding residuals are independent of the domain identifiers and unstable, otherwise;
In a third step (300), for each domain
- Initializing (301) a second causal discovery model;
- Training (302) the second causal discovery model on samples from that domain while
(i) performing either freezing (302a) parameters associated with variables labelled stable in the second step, or
penalizing (302b) deviations of parameters associated with variables labelled stable from their values in the first step, and
(ii) at least updating the parameters associated with variables labelled unstable;
thereby determining a second set of mechanism parameters and a second adjacency matrix specific to the domain.

2. Method (1000) according to claim 1, wherein, in the third step (300), freezing (302a) parameters associated with stable variables comprises restoring their values according to the first set of mechanism parameters and setting gradients associated with the stable variables to zero such that their mechanism parameters remain fixed while the unstable variables are updated/adjusted.

3. Method (1000) according to claim 1, wherein, in the third step, penalizing (302b) deviations of parameters from their values in the first step comprises adding a penalty term proportional to the average squared distance between the first and second adjacency matrices on edges incident to the stable variables to a loss function that is optimised during training of the respective second causal-discovery model.

4. Method according to any of the preceding claims, wherein, in the third step (300), in each domain,
- parameters of the second causal discovery model associated with stable variables are initialized with the first mechanism parameters, and parameters of the second causal discovery model associated with unstable variables are initialized randomly, if in the subsequent training of the second causal discovery model parameters associated with variables labelled stable in the second step are frozen (302a), and
- parameters of the second causal discovery model are initialized randomly if in the subsequent training of the second causal discovery model, deviations of parameters associated with variables labelled stable are penalized (302b).

5. Method (1000) according to any of the preceding claims, wherein the differentiable causal-discovery model is a feed-forward multilayer perceptron whose first-layer column L2-norms constitute a weighted adjacency matrix W, and wherein the neural-network parameters are determined by gradient-based optimisation while enforcing sparsity and enforcing acyclicity with the smooth constraint $h \left(W\right) = tr \left({e}^{∧}\left\{W∘W\right\}\right) - d = 0 ,$ with d being the number of measured variables.

6. Method (1000) according to any of the preceding steps, wherein determining whether the residuals are independent of the domain identifiers comprises applying a Hilbert-Schmidt Independence Criterion test to the residuals and domain identifiers at a predefined significance level.

7. Method (1000) according to any of the preceding claims, wherein the observed variables comprise at least one of temperature, material type, pressing force, displacement, and wherein the multiple domains comprise different material types of one or several workpieces.

8. Method (1000) according to claim 7, wherein obtaining samples comprises obtaining measurements of said variables during press-fitting manufacturing; wherein the determined causal relationships are used for improved process control, predictive modeling of shrinkage rate, and/or fault detection in press-fitting manufacturing processes, the method further comprising, upon detection of a fault condition in the invariant causal relationships exceeding a predetermined threshold, automatically controlling (400a) or stopping (400b) the press-fitting process to mitigate the fault condition.

9. Method according to claim 8, wherein the fault condition is mitigated by automatically reducing (500) the press-fitting force to a safe preset value and/or commanding an operator-alert via a human-machine-interface.

10. Data processing system, comprising at least one processor configured to perform the method according to any of the claims 1 to 9.

11. Computer program comprising instructions which, when the program is executed by a computer, cause the computer to carry out the method according to any of the claims 1 to 9.

12. Computer-readable data carrier having stored thereon the computer program of claim 11.
